# EUROPEAN PATENT SPECIFICATION

(11) **EP 3 162 757 B1**
(45) Date of publication and mention of the grant of the patent: **20.06.2018**
(21) Application number: 15250020.3
(22) Date of filing: 30.10.2015
(51) Int. Cl.: B67D 1/08, B67D 1/12, F16L 59/16

(54) **A FOB DETECTION ARANGEMENT COMPRISING A FOB DETECTION UNIT AND COMPRISING AN INSULATING HOUSING, AND A METHOD OF INSULATING AND COOLING A FOB DETECTION UNIT**
FOB-DETEKTIONSANORDNUNG MIT EINER FOB DETEKTIONSEINHEIT UND MIT EINEM ISOLIERENDEN GEHÄUSE, VERFAHREN ZUR ISOLIERUNG UND KÜHLUNG EINER FOB-DETEKTIONSEINHEIT
AGENCEMENT DE DÉTECTION DE MOUSSE COMPRENANT UN BOÎTIER ISOLANT POUR UNE UNITÉ DE DÉTECTION DE MOUSSE ET PROCÉDÉ D'ISOLATION ET DE REFROIDISSEMENT DE LADITE UNITÉ

(43) Date of publication of application: 03.05.2017
(73) Proprietor: Carlsberg Breweries A/S, 1799 Copenhagen V (DK)
(72) Inventor: Hobden, Jason, Appleton, Warrington WA4 5lg (GB); Puckering, Gary, Kingston Upon Hull East, Yorkshire HU8 9EQ (GB)
(74) Representative: Budde Schou A/S

(56) References cited:
- DE-A1- 19 905 744
- DE-U1-202010 004 970
- JP-A- H02 154 896
- JP-A- S60 121 392

## Description

The present invention relates to a FOB detection arrangement comprising a FOB detection unit and an insulation housing for the FOB detection unit and a method of insulating and cooling a FOB detection unit.

### INTRODUCTION

The dispensing of draught beverages such a draught beer is typically achieved by providing the beverage in a pressurized beverage container referred to as a keg and allowing the beverage to flow via a beverage line to a beverage tap. Traditionally, steel containers connected to a carbon dioxide supply or a mixed gas supply have been used; however, nowadays collapsible polymeric containers also exist, one example being disclosed in the applicant's own international application WO2009/024147.

When the beverage container is nearly empty, a significant amount of gas may enter the beverage line and mix with the remaining beverage in the beverage line and this may result in a large amount of foam escaping from the beverage tap during tapping. A beverage glass filled with an excessive amount of foam may be less appealing and must in many cases be discarded. Further, foam may remain in the beverage line so that the first beverage glass filled after installing a new and full beverage container will have an excessive amount of foam as well.

In order to stop the dispensing of the beverage before a significant amount of foam has entered the beverage line, a so-called FOB detection unit may be used. FOB stands for Foam On Beer and a FOB detection unit is thus a foam on beer detection unit. The purpose of the FOB detection unit is to detect the presence of foam in the beverage line and to stop the beverage dispensing before the foam reaches the beverage tap. The FOB detection unit comprises a chamber having a beverage inlet and a beverage outlet. The chamber has a float valve and when the chamber is filled with beverage, the float valve will be open and there will be a free fluid passage between the beverage inlet and the beverage outlet, whereas when gas enters the chamber, the float valve will close off the passage between the beverage inlet and the beverage outlet and thereby prevent foam from reaching the beverage tap. When a new full beverage container has been installed, the FOB detection unit is vented where after beverage dispensing may be resumed.

The prior art document GB 2 431 146 A describes an example of state of the art FOB detection unit having a vent valve and a float valve.

The prior art document GB 2 236 180 A describes an example of state of the art FOB detection unit using a beam of light for detecting the presence of a bubble in a beverage duct.

The beverage container is typically kept at a chilled location in order to keep the beverage fresh and to prevent microbiological growth. The beverage line also includes some amount of beverage and should consequently also be cooled in order to keep the beverage fresh between the container and the tap, and to avoid microbiological growth in the beverage line. In many cases, the beverage line is kept cool by means of a cooling fluid line extending parallel to the beverage line within an insulating cover, a so-called python.

One example is GB 2 166 633 A which describes a set of pipes which can form a closed loop for carrying cooling water within an insulated bundle.

Another example is EP 1 626 221 A1 describing a python having a plurality of beverage conducting tubes and refrigerant lies surrounded by a layer of foam insulation.

FOB detection units are typically located between the container and the tap and thus constitutes an interruption in the insulated python. The FOB detection unit must be readily accessible for the user and thus cannot be enclosed within the python due to need of venting the FOB detection unit after replacing the beverage container. The FOB detection unit thus often remains in room temperature. However, as the FOB detection unit also contains some beverage, it constitutes a possible location for microbiological growth.

Thus, the object according to the present invention is to provide technologies for insulating and cooling the FOB detection unit.

Further prior art include DE 199 05 744 A which relates to an insulating cap comprising two cap shells each comprising a sleeve part and two cover parts which can be fitted together and form in the assembled state a housing which encloses the pipe fitting and contains insulating material. The surface of each sleeve part is curved with a predetermined profile and the cover parts each have an edge socket to hold a transverse edge of the sleeve part, which follows the profiled section.

### SUMMARY OF THE INVENTION

The above need and the above object together with numerous other needs and objects which will be evident from the detailed description will be achieved by a FOB detection arrangement according to claim 1.

The insulating housing may typically be made of the same material as the python to which it is normally connected. The internal cavity should be suitable for fitting the FOB detection unit, i.e. the cavity should have a size and shape suitable for enclosing the FOB detector and preferably keeping the FOB detector at a fixed location within the insulated housing.

The insulating housing is separable into a front housing part and a rear housing part along a perimeter for allowing access to the FOB detection unit for inspection, for venting, and for renovation/replacement. The front housing part and the rear housing part when separated preferably reveal the complete internal cavity. During use of the beverage dispensing assembly, the insulating housing is closed, i.e. the front housing is mounted onto the rear housing so that the internal cavity and the FOB detection unit is enclosed and insulated in relation to the surroundings.

The set of recesses constitutes openings in the insulating housing when the insulating housing is closed. The set of recesses allows the beverage inlet line and the beverage outlet line to be connected to the FOB detection unit. The set of recesses further allows the cooling fluid line to enter the insulating housing adjacent the beverage inlet line, extend via the internal c½avity to the beverage outlet line and exit the insulating housing adjacent the beverage outlet line. The cooling fluid line thus cools the beverage inlet line, the beverage outlet line and the FOB detection unit.

According to a further embodiment, the insulating housing according to any of the preceding claims comprises one or more fixtures for fixating the FOB detection unit to the rear housing part.

In order to further fixate the FOB detection unit to the rear housing part, fixtures may be provided for fixating the FOB detection unit to the rear housing part. In this way, the FOB detection unit cannot fall out of the internal cavity when the front housing part is separated from the rear housing part.

According to a further embodiment, the insulating housing further comprises a back plate located adjacent the rear housing part opposite the front housing part, the back plate including the one or more fixtures for fixating the FOB detection unit to the rear housing part and fixing elements for fixating the insulating housing to a wall. Preferably, the rear housing part is fixated to a back plate, which in turn is mounted to a wall or other fixed structure. In this way, the arrangement comprising the FOB detection unit and the insulating housing is easy to handle.

According to a further embodiment, the rear housing part and/or the front housing part comprise one or more fixtures for fixating the front housing part to the rear housing part.

In this way, the front housing part and the rear housing part are sealed together preventing the front housing part from falling off and eliminating any gap between the front housing part and the rear housing part and any associated thermal leakage.

According to a further embodiment, the one or more fixtures comprise a threaded rod and an associated nut.

Preferably, the fixture of the rear housing part to the FOB detection unit, the back plate to the rear housing part and/or wall and/or the front housing part to the rear housing part is achieved by means of a threaded rod and an associated nut. In this way, the fixture is easy to assemble and disassemble.

According to a further embodiment, the insulating housing comprise one or more further recesses extending between the outer perimeter of the insulating housing and the internal cavity of the insulating housing for accommodating a vent line of a vent mechanism of the FOB detection unit and/or a reset switch of a vent mechanism of the FOB detection unit.

In this way, the FOB detection unit may be reset without separating the front housing part and the rear housing part.

According to yet a further embodiment, the rear housing part defines the whole or at least a greater part of the internal cavity and/or the set of recesses.

In this way, the FOB detection unit may rest stably fitted within the rear housing part when the front housing part has been removed.

According to a further embodiment, the set of recesses comprises a first pair of recesses or a first common recess for the beverage inlet line and the cooling fluid line, and on the opposite side of the insulating housing, a second pair of recesses or a second common recess for the beverage outlet line and the cooling fluid line.

By orienting the set of recesses such that the recess or recesses adapted for accommodating the beverage inlet line and an inlet part of the cooling fluid line are located on one side of the insulating housing, and that the recess or recesses adapted for accommodating the beverage outlet line and an outlet part of the cooling fluid line are located on the opposite side of the insulating housing, the insulating housing and the associated FOB detection unit may be mounted in an "in line" configuration such that the incoming python including the beverage line leading from the beverage container and the cooling line are mounted at one side of the insulating housing and the outgoing python including the beverage line leading to the beverage tap and the cooling line are mounted at the opposite side of the insulating housing.

The beverage inlet line and the inlet part of the cooling line may be arranged in separate recesses or in a common recess. Likewise, the beverage outlet line and the outlet part of the cooling line may be arranged in separate recesses or in a common recess

According to a further embodiment, the insulating housing defines a height of 10-50cm, preferably 20-30cm, a width of 5-40 cm, preferably 10-25cm, and a depth of 5-30cm, preferably 10-20cm.

The above measures constitute typical measures for the insulating housing in order to provide sufficient insulation for the FOB detection unit.

According to a further embodiment, the front housing part comprises a LED light for indicating the status of the FOB detection unit.

Typically, the residual air inside the FOB detection unit must be manually vented after the beverage container has been exchanged. For this purpose, state of the art FOB detectors are made of transparent materials. Advantageously, the front housing part of the insulating housing has a LED so that the status of the FOB detection unit or at least the chamber of the FOB detection unit may be inspected from the outside without separating the front housing part and the rear housing part. In particular, the LED may be controlled by a reed switch or the like for indicating when the float valve is adjacent to the bottom of the chamber. The reed switch preferably comprises a magnet incorporated into the float valve and a detector outside the chamber. The magnet may preferably be enclosed within a plastic coating or body, e.g. polyethylene or PFFE, for preventing the beverage from being influenced by the iron in the magnet.

According to a further embodiment, the front housing part and/or the rear housing part comprise PU foam or EPS insulation .

In order to provide an efficient and cost-effective thermal insulation of the FOB detection unit, the front housing part and/or the rear housing part comprise PU foam insulation or EPS (expanded polystyrene) insulation. In this way, the insulating housing will be sufficiently rigid to support the FOB detection unit when placed in the internal cavity. The above need and the above object together with numerous other needs and objects which will be evident from the detailed description will according to the present invention be achieved by a FOB detection arrangement comprising a FOB detection unit and an insulating housing according to any of the preceding embodiments.

It is evident that the insulating housing may be supplied together with a FOB detection unit as a FOB detection arrangement, whereby the FOB detection unit of the insulating housing may be made to exactly fit within the internal cavity of the insulating housing.

According to a further embodiment, the FOB detection arrangement further comprising an incoming beverage python connected to the set of recesses and including the beverage inlet line and the cooling fluid line, and an outgoing beverage python connected to the set of recesses and including the beverage outlet line and the cooling fluid line.

Both the beverage line and the cooling line will extend within a python from the container to the insulating housing and from the insulating housing to the tap. In this way, the beverage line will be insulated and chilled the full distance between the beverage container and the tap.

The above need and the above object together with numerous other needs and objects which will be evident from the detailed description will according to the present invention be achieved by a method of insulating and cooling a FOB detection unit, the method comprising providing the FOB detection unit fitted within an internal cavity of an insulating housing, the insulating housing defining a rear housing part and a front housing part, the rear housing part and the front housing part being separable along an outer perimeter of the insulating housing for exposing the FOB detection unit within the internal cavity, the insulating housing further comprising a set of recesses extending between the outer perimeter of the insulating housing and the internal cavity of the insulating housing for accommodating a beverage inlet line in fluid communication with the FOB detection unit, a beverage outlet line in fluid communication with the FOB detection unit, and a cooling fluid line extending through the insulating housing adjacent to the beverage inlet line, the beverage outlet line and the FOB detection unit, the method further comprising the steps of causing a beverage to flow from the beverage inlet line to the beverage outlet line and causing a cooling fluid to flow through the cooling fluid line for cooling the beverage inlet line, the beverage outlet line and the FOB detection unit.

It is evident that the method may be used together with the above described arrangement and/or the above described insulating housing. By operating the beverage tap of the beverage dispensing system, beverage will flow in the beverage line inside the python from the beverage container via the FOB detection unit to the beverage tap. When the tap is closed, the beverage flow will be interrupted, whereas cooling fluid will constantly flow in the cooling fluid line adjacent to the beverage line and FOB detection unit in order to keep the beverage within the beverage line and FOB detection unit cool and fresh.

It is further evident that the method may include the features of any of the embodiments described above in connection with the insulating housing.

### Brief description of the drawings

FIG. 1A is a perspective view of an insulating housing and a FOB detection unit.
FIG. 1B is a perspective view of an open insulating housing and a FOB detection unit.
FIG. 1C is a perspective view of an insulating housing when closed.
FIG. 1D is a perspective view of an insulating housing connected to a python.
FIG. 2A is a perspective view of another insulating housing when open.
FIG. 2B is a perspective view of another insulating housing when closed.
FIG. 3 is a perspective view of a beverage dispensing system.
FIG. 4 is a perspective view of another beverage dispensing system.
FIG. 5A and B are two respective perspective views of an alternative embodiment.
FIG. 6 is an internal view of the alternative embodiment.

### Detailed description of the drawings

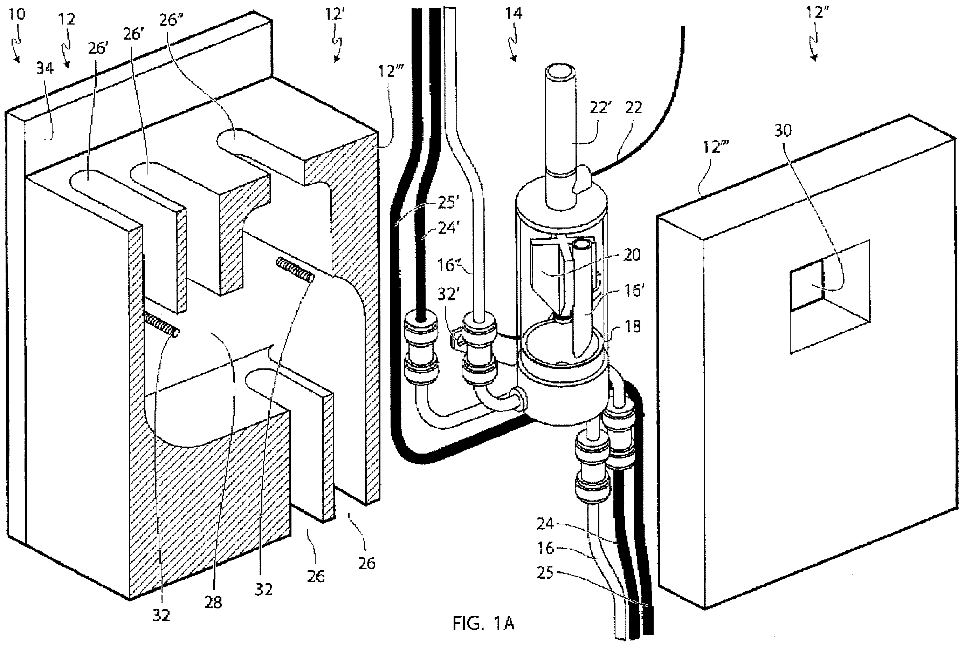

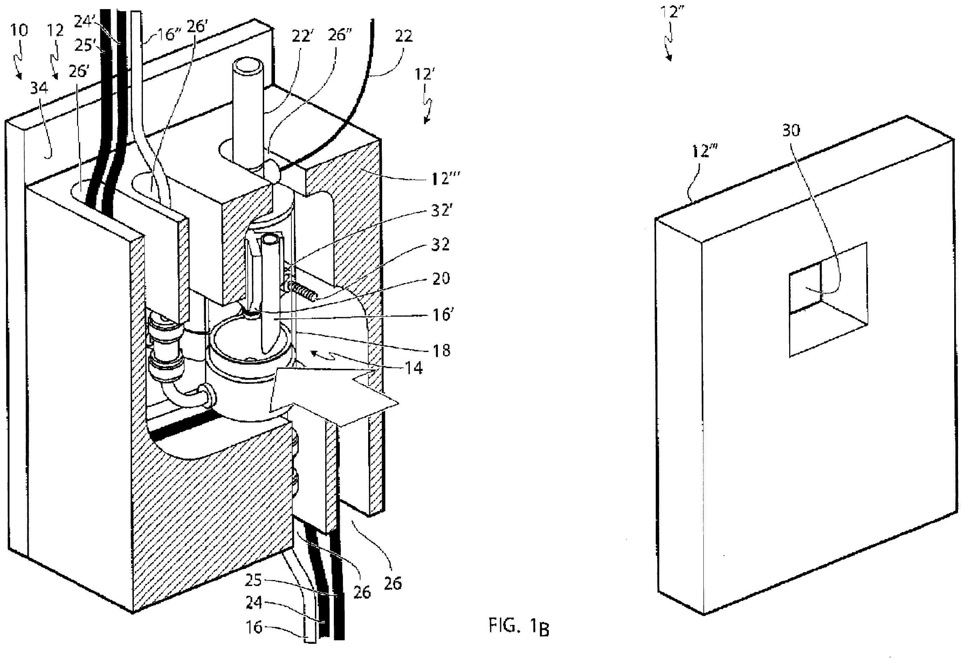

FIG. 1A shows a perspective view of a FOB detection arrangement 10 comprising an insulating housing 12 and a FOB detection unit 14. The insulating housing is made of foamed polymeric insulation material and constituting a front housing part 12' and a rear housing part 12" separable along an outer perimeter 12'". The FOB detection unit 14 comprises a beverage inlet line 16, a riser pipe 16', a beverage outlet line 16" and a chamber 18 enclosing the riser pipe 16'. The chamber 18 is pressure-tight and made of transparent material. The chamber 18 further includes a float valve 20.

Beverage is supplied to the chamber 18 from a pressurized beverage container (not shown) via the beverage inlet line 16 and a riser pipe 16'. When the chamber 18 is filled with beverage, the float valve 20 rises and allows the beverage to flow out via the beverage outlet line 16" to the beverage tap (not shown). When the beverage container (not shown) is nearly empty and foam and gas enter the chamber 18, the float valve 20 will move downwards and block the beverage outlet line 16". In this way, foam and gas are prevented from reaching the beverage tap (not shown).

When a new beverage container (not shown) has been installed, the chamber 18 is vented by allowing gas to escape via the vent mechanism 22 by pressing the button 22' When beverage appears in the vent mechanism 22, the gas and foam have been vented out of the chamber 18, the chamber 18 is filled with beverage and the float valve 20 will rise and allow beverage to flow into the beverage outlet line 16" again. Thereafter, the button 22' is released and beverage dispensing may be resumed.

The beverage inlet line 16, the FOB detection unit 14 and the beverage outlet line 16" are kept cool via a cooling line 24 24' in which cooling fluid is constantly circulated. The cooling line 24 24' is here illustrated together with a return cooling line 25 25' running parallel to the cooling line 24 24'. The purpose of the return cooling line is to transport the coolant or cooling fluid from the beverage tap back to the cooling unit as will be illustrated further below. It is understood that the return cooling line may alternatively be led outside the insulating housing 12. In order to keep the beverage line 16 16', the cooling line 24 24' and the FOB detection unit 14 thermally insulated, the beverage inlet line 16 and the inlet part of the cooling line 24 are placed in a first set of recesses 26 in the rear housing part 12', the beverage outlet line 16" and the outlet part of the cooling line 24' are placed in a second set of recesses 26' in the rear housing part 12', and the FOB detection unit 14 is placed in an internal cavity 28 of the insulation housing 12. A further recess 26" is provided for the vent mechanism 22 and the button 22'.

The front housing part 12" includes a transparent window 30 in order to be able to inspect the FOB detection unit 14 when the insulating housing 12 is closed. Thereby, the FOB detection unit 14 may be vented without separating the rear housing part 12' and the front housing part 12" by operating the button 22' via the third recess 26". The FOB detection unit 14 is fixated in the internal cavity 28 by fixtures 32 in the form of threaded rods, which are interconnectable with a fixture 32' of the FOB detection unit 14, and a nut (not shown), The insulating housing 12 further comprises a back plate 34 having fixtures so that the FOB assembly 10 may be mounted to a wall or the like. The beverage lines 16' 16" and the cooling lines 24' 24" are typically made of plastic- or metal tubing.

FIG. 18 shows a perspective view of a rear housing part 12' having a FOB detection unit 14 fitted in the internal cavity 28. The FOB detection unit 14 is inserted into the internal cavity 26 of the rear housing part 12' as shown by the arrow. The set of recesses 26 26' 26" accommodates the beverage lines 16 16", the cooling lines 24 24' and the vent mechanism 22 so that they are accessible from outside the insulating housing 12.

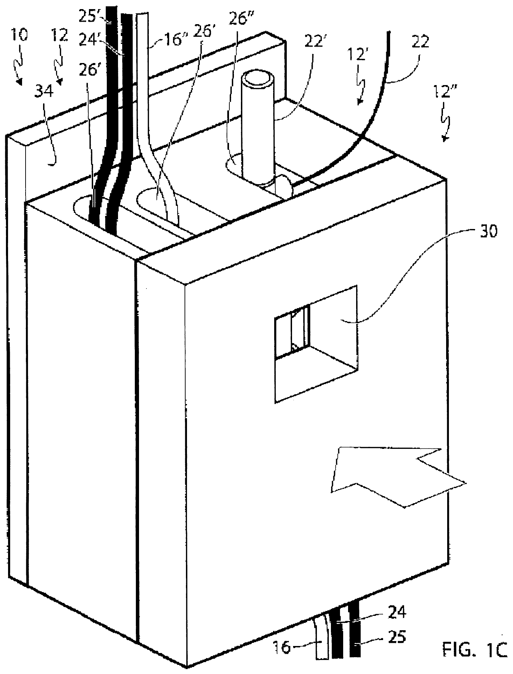

FIG. 1C shows a perspective view of the FOB arrangement 10 when the front housing part 12" of the insulating housing 12 has been applied to the rear housing part 12' of the insulating housing 12. The insulating housing 12 is thereby closed. The beverage lines 16 16", the cooling lines 24 24' and the vent mechanism 22 are accessible from outside via the set of recesses 26 26' 26" at the perimeter of the insulating housing 12. The FOB detection unit 14 may be visually inspected via the window 30.

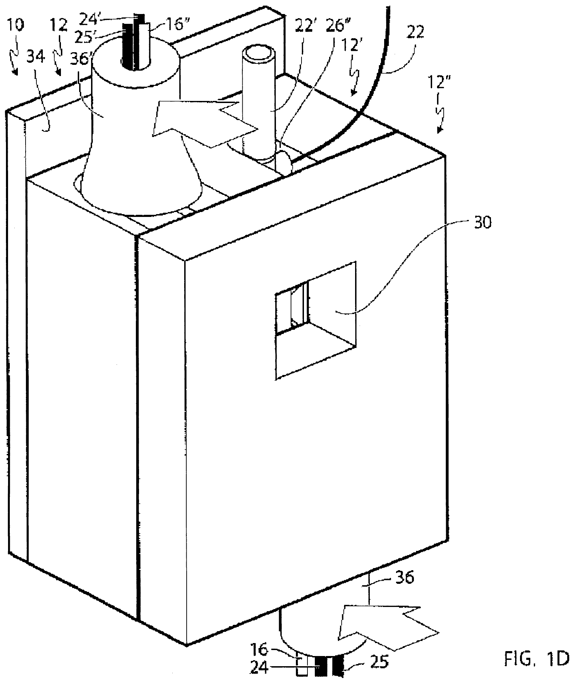

FIG. 1D shows a perspective view of the FOB arrangement 10 when an incoming beverage python 36 and an outgoing beverage python 36 have been connected to the respective set of recesses 26 26' of the insulating housing 12. The python 36 36' is thermally insulated and includes one or more beverage lines and one or more cooling lines.

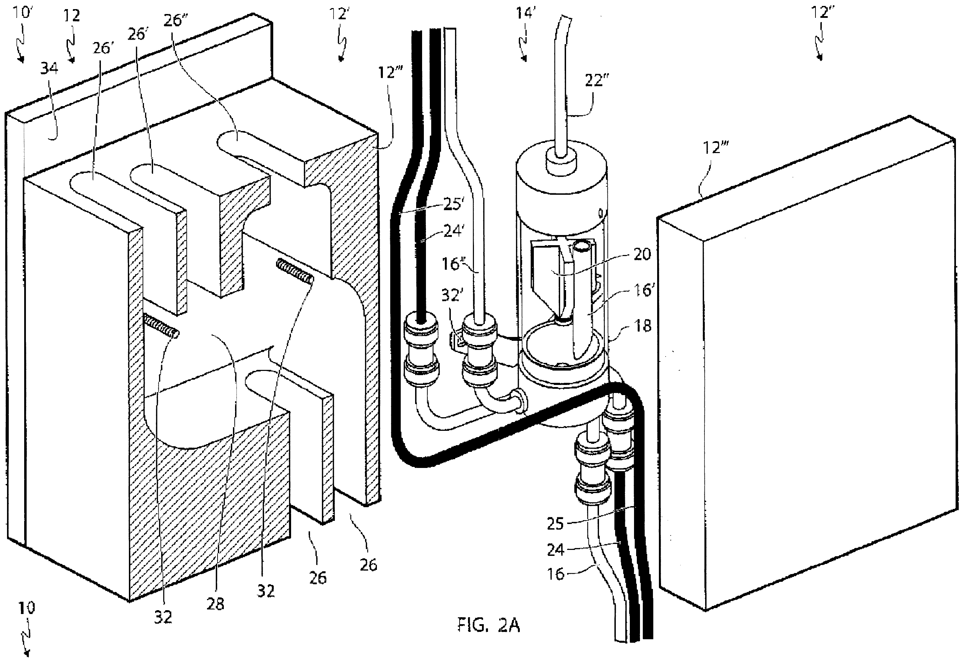

FIG. 2A shows a perspective view of another embodiment of a FOB arrangement 10'. The FOB arrangement 10' includes a FOB detection unit 14' having an automatic venting mechanism 20". This eliminates the need of a manual venting after each exchange of beverage container and thus there is no need for a window in the front housing part 12". The thermal losses associated with windows may thus be eliminated.

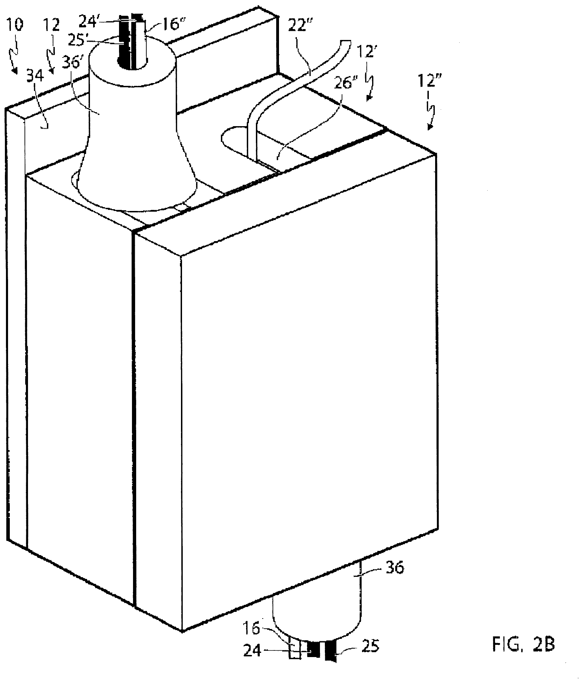

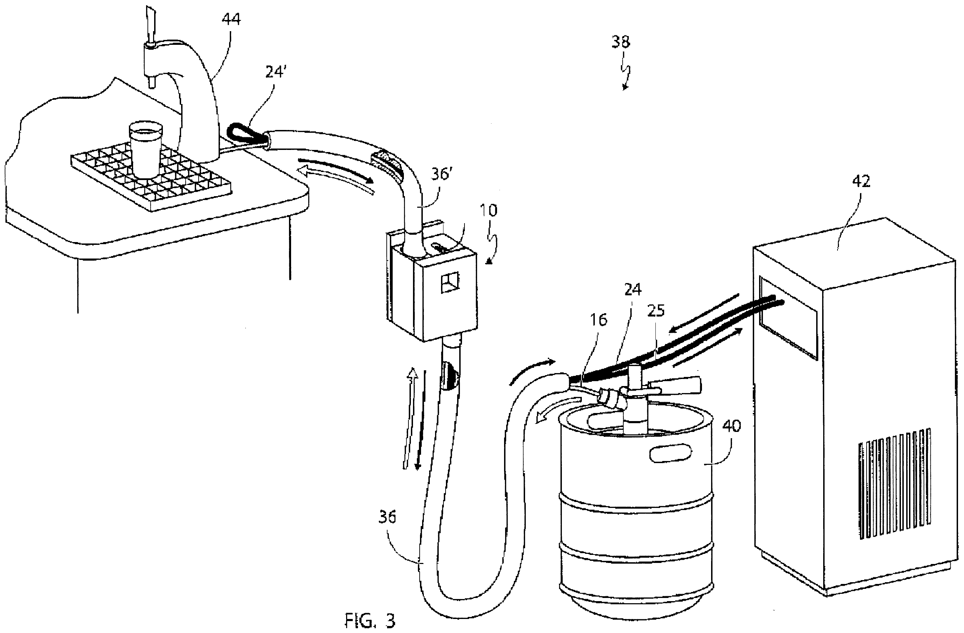

FIG. 2B shows a perspective view of the FOB arrangement 10' when the insulating housing 12 has been closed by joining the front housing part 12" and the rear housing part 12' and an incoming beverage python 36 and an outgoing beverage python 36 have been connected to the respective set of recesses 26 26' of the insulating housing 12. The automatic vent mechanism 20" extends through the further recess 26" FIG. 3 shows a beverage dispensing assembly 38 having a beverage container in the form of a conventional steel keg 40, which is pressurized by a CO₂ source (not shown). The steel keg 40 is kept in a chilled location. A cooling device 42 provides cooling via a cooling line 24. One section of the python 36 leads the cooling line 24 and a beverage line 16 from the steel keg 40 to the FOB arrangement 10. The FOB arrangement 10 includes the insulating housing 12 and the FOB detection unit 14. Another section of the python 36' leads the cooling line 24 and a beverage line 16 from the FOB arrangement 10 to the beverage tap 44.

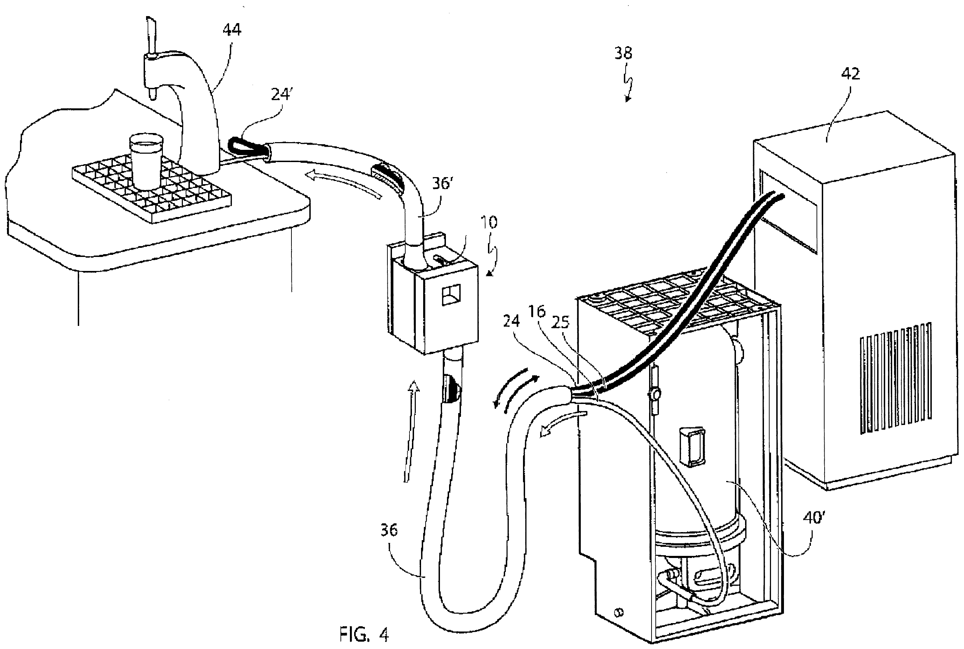

FIG. 4 shows a beverage dispensing assembly 38' similar to the beverage dispensing assembly 38 shown in the previous figure except that the steel keg has been replaced - with a beverage container in the form of a collapsible plastic container accommodated within a pressure chamber 40'. The functional principle is similar to the previous embodiment except that the amount of gas entering the beverage line is limited to the headspace in the collapsible container,

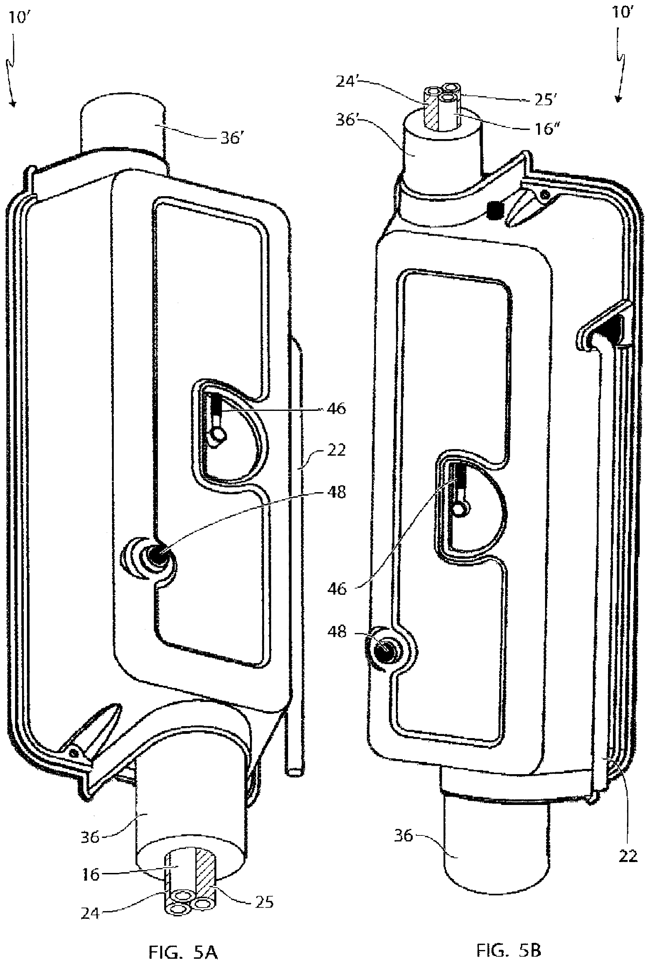

FIG. 5A and B are two respective perspective views of an alternative embodiment of a FOB detection device 10'. In the present embodiment, the housing 12' constitutes a cover, which is directly applied to the back plate and is attached to the back plate 34 by means of an opening mechanism 46. Further, the housing is provided with a LED light 48 for informing the user directly of the status of the FOB detector without having to provide a window in the housing 12'. The LED light may be connected to a reed switch having a magnet incorporated into the float valve and a detector outside the chamber. The magnet may preferably be enclosed within a plastic coating or body e.g. polyethylene or PFFE, for preventing the beverage from being influenced by the iron in the magnet.

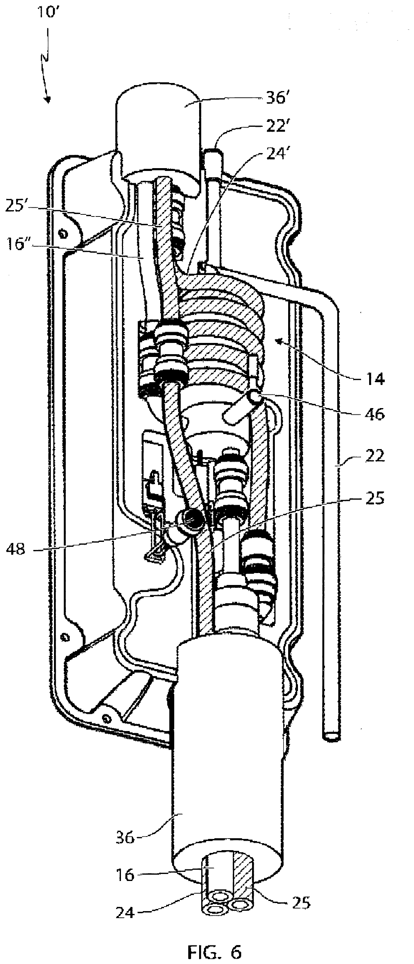

FIG. 6 is an internal view of the alternative embodiment of a FOB detection device 10'. Particularly notable is the cooling line 24, which is coiled about the FOB detector 14 in order to provide additional cooling to the FOB detector 14.

It is evident that the above detailed described embodiments may be further modified, combined or improved without departing from the general inventive idea according to the present invention.

### Reference numerals used in the figures

- 10.: FOB detection arrangement
- 12.: Insulating housing
- 14.: FOB detector
- 16.: Beverage line
- 18.: Chamber
- 20.: Float valve
- 22.: Vent mechanism
- 24.: Cooling line
- 26.: First set of recesses
- 28.: Cavity
- 30.: Window
- 32.: Fixture
- 34.: Back plate
- 36.: Python
- 38.: Beverage dispensing system
- 40.: Beverage container
- 42.: Cooling device
- 44.: Beverage tap
- 46.: Opening mechanism
- 48.: LED light

## Claims

1. A FOB detection arrangement (10) comprising a FOB detection unit (14) **characterised by** an insulating housing (12) for said FOB detection unit (14), said insulating housing (12) defining an internal cavity (28) for fitting said FOB detection unit (14), said insulating housing (12) defining a rear housing part and a front housing part, said rear housing part and said front housing part being separable along an outer perimeter of said insulating housing (12) for exposing said internal cavity (28) and accessing said FOB detection unit (14), said insulating housing (12) further comprising a set of recesses (26) extending between said outer perimeter of said insulating housing (12) and said internal cavity (28) of said insulating housing (12) for accommodating a beverage inlet line (16) in fluid communication with said FOB detection unit (14), a beverage outlet line (16) in fluid communication with said FOB detection unit (14), and a cooling fluid line (24) extending through said insulating housing (12) adjacent to said beverage inlet line (16), said beverage outlet line (16) and said FOB detection unit (14) for cooling said beverage inlet line (16), said beverage outlet line (16) and said FOB detection unit (14).

2. The FOB detection arrangement (10) according to claim 1, wherein said insulating housing (12) comprise one or more fixtures (32) for fixating said FOB detection unit (14) to said rear housing part.

3. The FOB detection arrangement (10) according to claim 2, wherein said insulating housing (12) further comprises a back plate (34) located adjacent said rear housing part opposite said front housing part, said back plate including said one or more fixtures (32) for fixating said FOB detection unit (14) to said rear housing part and fixing elements for fixating said insulating housing (12) to a wall.

4. The FOB detection arrangement (10) according to any of the preceding claims, wherein said rear housing part and/or said front housing part comprise one or more fixtures (32) for fixating said front housing part to said rear housing part.

5. The FOB detection arrangement (10) according to any of the claims 2-4, wherein said one or more fixtures (32) comprise a threaded rod and an associated nut.

6. The FOB detection arrangement (10) according to any of the preceding claims, wherein said insulating housing (12) comprises one or more further recesses (26) extending between said outer perimeter of said insulating housing (12) and said internal cavity (28) of said insulating housing (12) for accommodating a vent line of a vent mechanism of said FOB detection unit (14) and/or a reset switch of a vent mechanism (22) of said FOB detection unit (14).

7. The FOB detection arrangement (10) according to any of the preceding claims, wherein said rear housing part defines the whole or at least a greater part of said internal cavity (28) and/or said set of recesses (26).

8. The FOB detection arrangement (10) according to any of the preceding claims, wherein said set of recesses (26) comprises a first pair of recesses (26) or a first common recess for said beverage inlet line (16) and said cooling fluid line, and on the opposite side of said insulating housing (12) a second pair of recesses (26) or a second common recess for said beverage outlet line (16) and said cooling fluid line,

9. The FOB detection arrangement (10) according to any of the preceding claims, wherein said insulating housing (12) defines a height of 10-50cm, preferably 20-30cm, a width of 5-40 cm, preferably 10-25cm, and a depth of 5-30cm, preferably 10-20cm.

10. The FOB detection arrangement (10) according to any of the preceding claims, wherein said front housing part comprises a LED light for indicating the status of said FOB detection unit (14).

11. The FOB detection arrangement (10) according to any of the preceding claims, wherein said front housing part and/or said rear housing part comprise PU foam or EPS insulation.

12. The FOB detection arrangement (10) according to any of the preceding claims, wherein said FOB detection arrangement (10) further comprising an incoming beverage python (36) connected to said set of recesses (26) and including said beverage inlet line (16) and said cooling fluid line (24), and an outgoing beverage python (36) connected to said set of recesses (26) and including said beverage outlet line (16) and said cooling fluid line (24).

13. A method of insulating and cooling a FOB detection unit (14), said method comprising providing said FOB detection unit (14) fitted within an internal cavity (28) of an insulating housing (12), said insulating housing (12) defining a rear housing part and a front housing part, said rear housing part and said front housing part being separable along an outer perimeter of said insulating housing (12) for exposing said FOB detection unit (14) within said internal cavity (28), said insulating housing (12) further comprising a set of recesses (26) extending between said outer perimeter of said insulating housing (12) and said internal cavity (28) of said insulating housing (12) for accommodating a beverage inlet line (16) in fluid communication with said FOB detection unit (14), a beverage outlet line (16) in fluid communication with said FOB detection unit (14), and a cooling fluid line extending through said insulating housing (12) adjacent to said beverage inlet line, said beverage outlet line (16) and said FOB detection unit (14), said method further comprising the steps of causing a beverage to flow from said beverage inlet line (16) to said beverage outlet line (16) and causing a cooling fluid to flow through said cooling fluid line for cooling said beverage inlet line, said beverage outlet line (16) and said FOB detection unit (14).

14. The method according to claim 13, further comprising any of the features of claims 1-11.

## Patentansprüche

1. FOB-Detektionsanordnung (10) umfassend eine FOB-Detektionseinheit (14) **gekennzeichnet durch** ein isolierendes Gehäuse (12) für die FOB-Detektionseinheit (14), wobei das isolierende Gehäuse (12) einen inneren Hohlraum (28) zur Anordnung der FOB-Detektionseinheit (14) definiert, wobei das isolierende Gehäuse (12) einen hinteren Gehäuseteil und einen vorderen Gehäuseteil definiert, wobei der hintere Gehäuseteil und der vordere Gehäuseteil längs eines Außenumfangs des isolierenden Gehäuses (12) trennbar sind, um den inneren Hohlraum (28) freizulegen und Zugang zu der FOB-Detektionseinheit (14) zu erlangen, wobei das isolierende Gehäuse (12) ferner einen Satz von Aussparungen (26) umfasst, die sich zwischen dem Außenumfang des isolierenden Gehäuses (12) und dem inneren Hohlraum (28) des isolierenden Gehäuses (12) zur Aufnahme einer Getränkeeinlassleitung (16) in Flüssigkeitsverbindung mit der FOB-Detektionseinheit (14), einer Getränkeauslassleitung (16) in Flüssigkeitsverbindung mit der FOB-Detektionseinheit (14), und einer Kühlflüssigkeitsleitung (24) erstrecken, die sich durch das isolierende Gehäuse (12) benachbart zu der Getränkeeinlassleitung (16), der Getränkeauslassleitung (16) und der FOB-Detektionseinheit (14) zur Kühlung der Getränkeeinlassleitung (16), der Getränkeauslassleitung (16) und der FOB-Detektionseinheit (14) erstreckt.

2. FOB-Detektionsanordnung (10) nach Anspruch 1, wobei das isolierende Gehäuse (12) eine oder mehrere Befestigungen (32) zur Befestigung der FOB-Detektionseinheit (14) an dem hinteren Gehäuseteil umfasst.

3. FOB-Detektionsanordnung (10) nach Anspruch 2, wobei das isolierende Gehäuse (12) ferner eine hintere Platte (34) umfasst, die benachbart zu dem hinteren Gehäuseteil gegenüber dem vorderen Gehäuseteil angeordnet ist, wobei die hintere Platte die eine oder mehrere Befestigungen (32) zur Befestigung der FOB-Detektionseinheit (14) an dem hinteren Gehäuseteil und Befestigungselemente zur Befestigung des isolierenden Gehäuses (12) an einer Wand umfasst.

4. FOB-Detektionsanordnung (10) nach einem der vorstehenden Ansprüche, wobei der hintere Gehäuseteil und/oder der vordere Gehäuseteil eine oder mehrere Befestigungen (32) zur Befestigung des vorderen Gehäuseteils an dem hinteren Gehäuseteil umfassen.

5. FOB-Detektionsanordnung (10) nach einem der Ansprüche 2-4, wobei die eine oder mehrere Befestigungen (32) eine Gewindestange und eine verbundene Mutter umfassen.

6. FOB-Detektionsanordnung (10) nach einem der vorstehenden Ansprüche, wobei das isolierende Gehäuse (12) eine oder mehrere Aussparungen (26) umfasst, die sich zwischen dem Außenumfang des isolierenden Gehäuses (12) und dem inneren Hohlraum (28) des isolierenden Gehäuses (12) zur Aufnahme einer Entlüftungsleitung einer Entlüftungsvorrichtung der FOB-Detektionseinheit (14) und/oder eines Rückstellschalters einer Entlüftungsvorrichtung (22) der FOB-Detektionseinheit (14) erstrecken.

7. FOB-Detektionsanordnung (10) nach einem der vorstehenden Ansprüche, wobei der hintere Gehäuseteil den ganzen oder mindestens einen größeren Teil des inneren Hohlraums (28) und/oder den Satz von Aussparungen (26) definiert.

8. FOB-Detektionsanordnung (10) nach einem der vorstehenden Ansprüche, wobei der Satz von Aussparungen (26) ein erstes Paar Aussparungen (26) oder eine erste gemeinsame Aussparung für die Getränkeeinlassleitung (16) und die Kühlflüssigkeitsleitung umfasst, und auf der gegenüberliegenden Seite des isolierenden Gehäuses (12) ein zweites Paar Aussparungen (26) oder eine zweite gemeinsame Aussparung für die Getränkeauslassleitung (16) und die Kühlflüssigkeitsleitung,

9. FOB-Detektionsanordnung (10) nach einem der vorstehenden Ansprüche, wobei das isolierende Gehäuse (12) eine Höhe von 10-50cm, bevorzugt 20-30cm, eine Breite von 5-40 cm, bevorzugt 10-25cm, und eine Tiefe von 5-30cm, bevorzugt 10-20cm definiert.

10. FOB-Detektionsanordnung (10) nach einem der vorstehenden Ansprüche, wobei der vordere Gehäuseteil ein LED-Licht zur Anzeige des Standes der FOB-Detektionseinheit (14) umfasst.

11. FOB-Detektionsanordnung (10) nach einem der vorstehenden Ansprüche, wobei der vordere Gehäuseteil und/oder der hintere Gehäuseteil PU-Schaum oder EPS-Dämmung umfasst.

12. FOB-Detektionsanordnung (10) nach einem der vorstehenden Ansprüche, wobei die FOB-Detektionsanordnung (10) ferner einen eingehenden Getränkepython (36) umfasst, der mit dem Satz von Aussparungen (26) verbunden ist und die Getränkeeinlassleitung (16) und die Kühlflüssigkeitsleitung (24) umfasst, und einen ausgehenden Getränkepython (36), der mit dem Satz von Aussparungen (26) verbunden ist und die Getränkeauslassleitung (16) und die Kühlflüssigkeitsleitung (24) umfasst.

13. Verfahren zur Isolierung und Kühlung einer FOB-Detektionseinheit (14), wobei das Verfahren Bereitstellung der FOB-Detektionseinheit (14) umfasst, die innerhalb eines inneren Hohlraums (28) eines isolierenden Gehäuses (12) angeordnet ist, wobei das isolierende Gehäuse (12) einen hinteren Gehäuseteil und einen vorderen Gehäuseteil definiert, wobei der hintere Gehäuseteil und der vordere Gehäuseteil längs eines Außenumfangs des isolierenden Gehäuses (12) trennbar sind, um die FOB-Detektionseinheit (14) innerhalb des inneren Hohlraums (28) freizulegen, wobei das isolierende Gehäuse (12) ferner einen Satz von Aussparungen (26) umfasst, die sich zwischen dem Außenumfang des isolierenden Gehäuses (12) und dem inneren Hohlraum (28) des isolierenden Gehäuses (12) zur Aufnahme einer Getränkeeinlassleitung (16) in Flüssigkeitsverbindung mit der FOB-Detektionseinheit (14), einer Getränkeauslassleitung (16) in Flüssigkeitsverbindung mit der FOB-Detektionseinheit (14), und einer Kühlflüssigkeitsleitung erstrecken, die sich durch das isolierende Gehäuse (12) benachbart zu der Getränkeeinlassleitung, der Getränkeauslassleitung (16) und der FOB-Detektionseinheit (14) erstreckt, wobei das Verfahren ferner die folgenden Schritte umfasst: Veranlassen eines Getränkes, aus der Getränkeeinlassleitung (16) in die Getränkeauslassleitung (16) zu fließen, und Veranlassen einer Kühlflüssigkeit, durch die Kühlflüssigkeitsleitung zur Kühlung der Getränkeeinlassleitung, der Getränkeauslassleitung (16) und der FOB-Detektionseinheit (14) zu fließen.

14. Verfahren nach Anspruch 13, ferner umfassend eines der Merkmale der Ansprüche 1-11.

## Revendications

1. Agencement de détection de mousse (10) comprenant une unité de détection de mousse (14) **caractérisé par**
un boîtier isolant (12) pour ladite unité de détection de mousse (14), ledit boîtier isolant (12) définissant une cavité interne (28) pour adapter ladite unité de détection de mousse (14), ledit boîtier isolant (12) définissant une partie de boîtier arrière et une partie de boîtier avant, ladite partie de boîtier arrière et ladite partie de boîtier avant étant séparable le long d'un périmètre extérieur dudit boîtier isolant (12) pour exposer ladite cavité interne (28) et accéder à ladite unité de détection de mousse (14), ledit boîtier isolant (12) comprenant en outre un ensemble d'évidements (26) s'étendant entre ledit périmètre extérieur dudit boîtier isolant (12) et ladite cavité interne (28) dudit boîtier isolant (12) pour accommoder une conduite d'entrée pour boissons (16) en communication fluidique avec ladite unité de détection de mousse (14), une conduite de sortie pour boissons (16) en communication fluidique avec ladite unité de détection de mousse (14), et une conduite de fluide de refroidissement (24) s'étendant à travers ledit boitîer isolant (12) adjacent à ladite conduite d'entrée pour boissons (16), ladite conduite de sortie pour boissons (16) et ladite unité de détection de mousse (14) pour refroidir ladite conduite d'entrée pour boissons (16) et ladite unité de détection de mousse (14).

2. Agencement de détection de mousse (10) selon la revendication 1, où ledit boîtier isolant (12) comprend au moins une fixation (32) pour fixer ladite unité de détection de mousse (14) à ladite partie de boîtier arrière.

3. Agencement de détection de mousse (10) selon la revendication 2, où ledit boîtier isolant (12) comprend en outre une plaque arrière (34) placée adjacente à ladite partie de boîtier arrière à l'opposé de ladite partie de boîtier avant, ladite plaque arrière comportant ladite au moins une fixation (32) pour fixer ladite unité de détection de mousse (14) à ladite partie de boîtier arrière et fixer des éléments pour fixer ledit boîtier isolant (12) à une paroi.

4. Agencement de détection de mousse (10) selon l'une quelconque des revendications précédentes, où ladite partie de boîtier arrière et/ou ladite partie de boîtier avant comprennent au moins une fixation (32) pour fixer ladite partie de boîtier avant à ladite partie de boîtier arrière.

5. Agencement de détection de mousse (10) selon l'une quelconque des revendications 2 à 4, où ladite au moins une fixation (32) comprend une tige filetée et un écrou associé.

6. Agencement de détection de mousse (10) selon l'une quelconque des revendications précédentes, où ledit boîtier isolant (12) comprend au moins un évidement ultérieur (26) s'étendant entre ledit périmètre extérieur dudit boîtier isolant (12) et ladite cavité interne (28) dudit boîtier isolant (12) pour accommoder une tuyauterie de ventilation d'un mécanisme d'air de ladite unité de détection de mousse (14) et/ou un interrupteur de remise en fonction d'un mécanisme d'air (22) de ladite détection de mousse (14).

7. Agencement de détection de mousse (10) selon l'une quelconque des revendications précédentes, où ladite partie de boîtier arrière définit l'ensemble ou au moins une partie majeure de ladite cavité interne (28) et/ou ledit ensemble d'évidements (26).

8. Agencement de détection de mousse (10) selon l'une quelconque des revendications précédentes, où ledit ensemble d'évidements (26) comprend une première paire d'évidements (26) ou un premier évidement commun pour ladite conduite d'entrée pour boissons (16) et ladite conduite de fluide de refroidissement, et sur le côté opposé dudit boîtier isolant (12) une deuxième paire d'évidements (26) ou un deuxième d'évidement commun pour ladite conduite d'entrée pour boissons (16) et ladite conduite de fluide de refroidissement.

9. Agencement de détection de mousse (10) selon l'une quelconque des revendications précédentes, où ledit boîtier isolant (12) définit une hauteur de 10 à 50 cm, préférablement de 20 à 30 cm, une largeur de 5 à 40 cm, préférablement de 10 à 25 cm, et une profondeur de 5 à 30 cm, préférablement de 10 à 20 cm.

10. Agencement de détection de mousse (10) selon l'une quelconque des revendications précédentes, où ladite partie de boîtier avant comprend une lumière LED pour indiquer létat de ladite détection de mousse (14).

11. Agencement de détection de mousse (10) selon l'une quelconque des revendications précédentes, où ladite partie de boîtier avant et/ou ladite partie de boîtier arrière comprend de la mousse de PU ou de l'isolant en PSE.

12. Agencement de détection de mousse (10) selon l'une quelconque des revendications précédentes, où ledit agencement de détection de mousse (10) comprend en outre un python de boissons entrant (36) connecté audit ensemble d'évidements (26) et comportant ladite conduite d'entrée pour boissons (16) et ladite conduite de fluide de refroidissement (24), et un python de boissons sortant (36) connecté audit ensemble d'évidements (26) et ladite conduite de sortie pour boissons (16) et ladite conduite de fluide de refroidissement (24).

13. Procédé d'isolation et de refroidissement d'une unité de détection de mousse (14), ledit procédé comprenant la fourniture de ladite détection de mousse (14) installée à l'intérieur d'une cavité interne (28) d'un boîtier isolant (12), ledit boîtier isolant (12) définissant une partie de boîtier arrière et une partie de boîtier avant, ladite partie de boîtier arrière et ladite partie de boîtier avant étant séparable le long d'un périmètre extérieur dudit boîtier isolant (12) afin d'exposer ladite unité de détection de mousse (14) à l'intérieur de ladite cavité interne (28), ledit boîtier isolant (12) comprenant en outre une ensemble d'évidements (26) s'étendant entre ledit périmètre extérieur dudit boîtier isolant (12) et ladite cavité interne (28) dudit boîtier isolant (12) pour accommoder une conduite d'entrée pour boissons (16) en communication fluidique avec ladite unité de détection de mousse (14), une conduite de sortie pour boissons (16) en communication fluidique avec ladite unité de détection de mousse (14), et une conduite de fluide de refroidissement s'étendant à travers ledit boitîer isolant (12) adjacent à ladite conduite d'entrée pour boissons, ladite conduite de sortie pour boissons (16) et ladite unité de détection de mousse (14), ledit procédé comprenant en outre les étapes de causer qu'une boisson coule de ladite conduite d'entrée pour boissons (16) à ladite conduite de sortie pour boissons (16) et causer qu'un fluide de refroidissement coule à travers ladite conduite de fluide de refroidissement pour refroidir ladite conduite d'entrée pour boissons, ladite conduite de sortie pour boissons (16) et ladite unité de détection de mousse (14).

14. Procédé selon la revendication 13, comprenant en outre l'une quelconque des caractérsitiques des revendications 1 à 11.
